# EUROPEAN PATENT APPLICATION

(11) **EP 2 975 811 A1**
(43) Date of publication of application: **20.01.2016**
(21) Application number: 13882471.9
(22) Date of filing: 10.09.2013
(51) Int. Cl.: H04L 12/851

(54) **INTERFACE SWITCHING METHOD AND DEVICE**

(30) Priority: 16.04.2013 CN 201310131415
(71) Applicant: ZTE Corporation, Shenzhen, Guangdong 518057 (CN)
(72) Inventor: ZHANG, Junjian, Shenzhen Guangdong 518057 (CN); WANG, Lin, Shenzhen Guangdong 518057 (CN); ZHANG, Weiliang, Shenzhen Guangdong 518057 (CN)
(74) Representative: De Bortoli, Tiziano
(86) International application number: PCT/CN2013/083188
(87) International publication number: WO 2014/169557

(57) **Abstract**

Disclosed is an interface switching method and device, which relates to the field of communications and solves the problem of affecting the data transmission efficiency due to an undue interface selection. The method includes: an abstraction layer selecting or switching an interface or interface group used for transmitting data based on a forwarding rule matching the data. The technical solution provided by the embodiments of the present invention is applicable to a home network, achieving a mechanism in which the abstraction layer of a multi-media home network device intelligently selects or switches the interface for data transmission according to information such as the link quality.

## Description

### Technical Field

The present invention relates to the field of communications, and more particularly, to an interface switching method and device under multi-media home network networking.

### Background of the Related Art

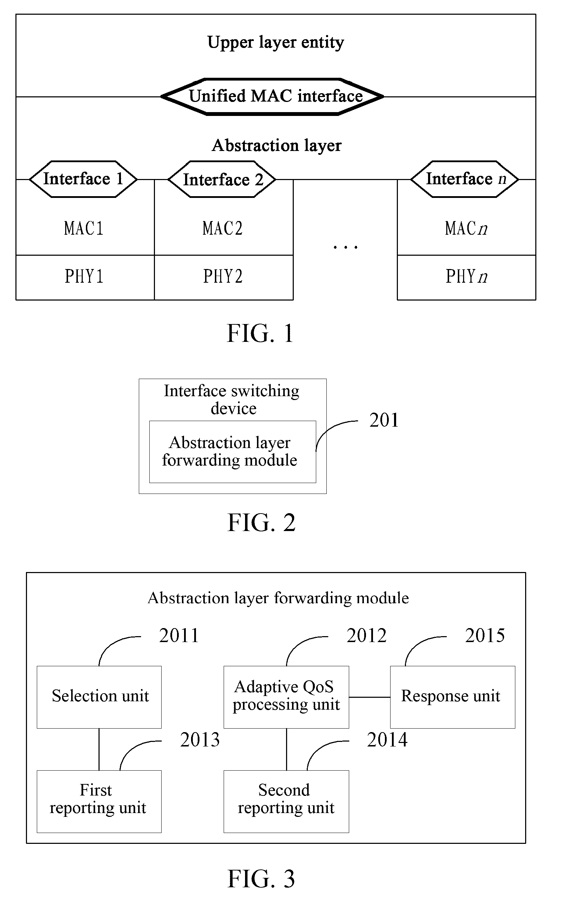

IEEE Standards Association is developing new P1905.1 standard, which provides an abstraction layer for multiple media in a home network, and as shown in FIG. 1, the abstraction layer provides a common SAP (Service Access Point) in the control and data level for a heterogeneous home network medium such as IEEE P1901, IEEE 802.11, IEEE 802.3 and MoCA 1.1, and the abstraction layer can abstract detailed and specific operational information with respect to each link being used and collect data transmitted and received via different links, so as to achieve seamless connection of various interconnection technologies in the home network. The software layer can also be used for advanced network management. For example, when a user device is connected to a link supporting different technologies, there is no longer a need to input different passwords but only a need to simply press a button. IEEE P1905.1 can complete device discovery and configuration, can establish a secure connection, and provide other advanced network management functions.

IEEE P1905.1 offers many key functions, has many advantages, and can be used to achieve next generation home network, as follows:
1) ease of use: as a consumer-oriented technology, it is vital that the network configuration and usage should be transparent for consumers. IEEE P1905.1 provides a universal configuration method for adding a device or establishing a secure link for the network as well as intelligently managing the network.
2) reliable services: common network problems such as congestion or temporary connection interruption may cause service quality deterioration. By using the link selection mechanism, the device can use an alternative link to reduce the number of service interruption, thereby ensuring good user experience.
3) increasing the network capacity: hybrid network can converge all the bandwidths of different links, and maximally increase the throughput.
4) supporting multi-channel media stream transmission: in applications such as interactive television, even one user can also simultaneously view multiple media streams, therefore a new generation network must have the ability to support multi-channel high-definition streaming media.
5) congestion management: it supports load balancing and may limit network congestion, ensuring network reliability and content quality.
6) interoperability: it fully supports standard specification for HomePlug, Wi-Fi, Ethernet and MoCA technology, and can achieve backward compatibility with these technologies.
7) security: operators hope to have a solid and reliable security mechanism, and in order to avoid excessive onsite services or after-sale telephone services, such security mechanism must be simple enough to improve ease of use. The device can be configured just by pressing a button, thus avoiding complex operations such as inputting a password.
8) achieving higher reliability through monitoring and diagnosing: it can provide consistent diagnosis, and in addition, the operators can remotely monitor the network, and repair possible damages in advance, so as to prevent the user experience from being affected.
9) self-service installation: the new generation home network must support simple installation, discovery and self-configuration.
10) universal interconnection: if the new generation network wants to achieve complete transparency, it must make users be able to connect to the network from any room at home, and the users do not need to know through which interface they communicate. In addition, the link switching must be seamless when moving from one room (and interface) to another room (and interface).

IEEE P1905.1 provides an efficient technology to effectively solve real problems existing in today's home network, and only after these problems are solved can the operators safely deploy hybrid networks. IEEE P1905.1 seamlessly connects the interconnection technologies that have been already deployed today, and provides the final element needed to achieve family interconnection.

In the scheme of a related abstraction layer aggregating different network media, with respect to the setting of a forwarding rule list in the abstraction layer forwarding module in the abstraction layer, the interface address list parameter therein can be set as a list comprising multiple MAC addresses or a single MAC address. If communication between two devices can be performed through a plurality of different transmission interfaces, an upper layer entity can set the interface address list parameter of the forwarding rule list as a set (i.e., an interface group) comprising the multiple transmission interfaces or one interface of the multiple transmission interfaces when configuring the forwarding rule, and the link quality of these interfaces dynamically changes in actual data transmissions. If the interfaces used are interfaces with poor link quality, the data transmission efficiency will be affected.

### Summary of the Invention

The present invention provides an interface switching method and device to solve the problem of affecting the data transmission efficiency due to undue interface selection.

An interface switching method, comprising:
an abstraction layer selecting or switching an interface or interface group used for transmitting data according to a forwarding rule matching the data.

Preferably, the forwarding rule comprises a current interface address list, and the current interface address list indicates the interface or interface group used for transmitting the data selected by the abstraction layer.

Preferably, the forwarding rule corresponds to an interface address list, the abstraction layer selecting the interface or interface group used for transmitting the data is:
in the interface address list after an upper layer entity newly adds or modifies the forwarding rule, the abstraction layer selecting a most suitable interface or interface group from the interface address list.

Preferably, selecting a most suitable interface or interface group from the interface addresses list is:
selecting a most suitable interface or interface group according to any one or more of the following parameters of the interface address list:
   a link quality parameter of the interface, a data information parameter of the data, a device information parameter of a multi-media home network device and a customized assessment parameter.

Preferably, the abstraction layer switching the interface or interface group used for transmitting the data is:
monitoring in the abstraction layer a link quality parameter of each interface contained in the interface address list of the forwarding rule;
comparing the link quality parameter of each interface with the link quality parameter of the current working interface address list of the forwarding rule;
according to a comparison result and any one or all of the following parameters, judging whether it is needed to switch the interface or interface group used for transmitting the data:
   the data information parameter of the data, the device information parameter of the multi-media home network device and the customized assessment parameter;
   when judging that it is needed to switch to a new interface or interface group, updating the current interface address list of the forwarding rule to the new interface or interface group.

Preferably, the interface switching method further comprises:
the abstraction layer taking the selected interface or interface group used for transmitting the data as an interface or interface group smart switching event, and notifying to the upper layer entity.

Preferably, the interface switching method further comprises:
the abstraction layer taking the switched interface or interface group used for transmitting the data as an interface or interface group smart switching event, and notifying to the upper layer entity.

Preferably, the abstraction layer taking the switched interface or interface group used for transmitting the data as the interface or interface group smart switching event, and notifying to the upper layer entity is:
the abstraction layer sending a current working interface address modifying notification message and reporting the interface or interface group smart switching event to the upper layer entity, wherein the current working interface address modifying notification message carries any or all of the following information:
   indicating a serial number of a forwarding rule corresponding to occurrence of interface or interface group switching,
   indicating the current working interface address list corresponding to the forwarding rule before smart switching,
   indicating the current working interface address list corresponding to the forwarding rule after the smart switching,
   indicating a time interval between a time of the occurrence of the smart switching and a time of a last modification of the current working interface address list,
   indicating reasons of the occurrence of the smart switching.

Preferably, the interface switching method further comprises:
the upper layer entity storing the interface or interface group smart switching event.

Preferably, the interface switching method further comprises:
when the abstraction layer receives a forwarding rule newly-adding request message sent by the upper layer entity, the abstraction layer sending a forwarding rule newly-adding acknowledge message to the upper layer entity, wherein the forwarding rule newly-adding acknowledge message carries the current interface address list;
when the abstraction layer receives a forwarding rule obtaining request message sent by the upper layer entity, the abstraction layer sending a forwarding rule obtaining response message to the upper layer entity, wherein the forwarding rule obtaining response message carries the current interface address list;
when the abstraction layer receives a forwarding rule modifying request message sent by the upper layer entity, the abstraction layer sending a forwarding rule modifying acknowledge message to the upper layer entity, wherein the forwarding rule modifying acknowledge message carries the current interface address list.

The present invention further provides an interface switching device, comprising:
an abstraction layer forwarding module, configured to: select or switch an interface or interface group used for transmitting data based on a forwarding rule matching the data.

Preferably, the forwarding rule comprises a current interface address list, the current interface address list indicates the interface or interface group used for transmitting the data selected by the abstraction layer.

Preferably, the forwarding rule corresponds to an interface address list, the abstraction layer forwarding module comprises:
a selection unit, configured to: in the interface address list after an upper layer entity newly-adds or modifies the forwarding rule, select a most suitable interface or interface group from the interface address list.

Preferably, the selection unit is configured to: select the most suitable interface or interface group according to any one or more of the following parameters of the interface address list:
a link quality parameter of the interface, a data information parameter of the data, a device information parameter of a multi-media home network device and a customized assessment parameter.

Preferably, the abstraction layer forwarding module further comprises an adaptive Quality of Service (QoS) processing unit, and the adaptive QoS processing unit comprises:
a link quality parameter monitoring sub-unit, configured to: monitor in the abstraction layer a link quality parameter of each interface contained in the interface address list of the forwarding rule;
a comparing sub-unit, configured to: compare the link quality parameter of each interface with the link quality parameter of the current working interface address list of the forwarding rule;
a judging sub-unit, configured to: based on a comparison result and any one or all of the following parameters, judge whether it is needed to switch the interface or interface group used for transmitting the data:
the data information parameter of the data, the device information parameter of the multi-media home network device and the customized assessment parameter;
a switch updating sub-unit, configured to: when judging that it is needed to switch to a new interface or interface group, update the current interface address list of the forwarding rule to the new interface or interface group.

Preferably, the abstraction layer forwarding module further comprises:
a first reporting unit, configured to: take the interface or interface group used for transmitting the data selected by the selection unit as an interface or interface group smart switching event, and notify to the upper layer entity.

Preferably, the abstraction layer forwarding module further comprises:
a second reporting unit, configured to: take the interface or interface group used for transmitting the data switched by the switch updating sub-unit as an interface or interface group smart switching event, and notify to the upper layer entity.

Preferably, the second reporting unit is configured to: after the switch updating sub-unit updates the current interface address list of the forwarding rule to the new interface or interface group, send a current working interface address modifying notification message and report the interface or interface group smart switching event to the upper layer entity, wherein the current working interface address modifying notification message carries any or all of the following information:
indicating a serial number of a forwarding rule corresponding to occurrence of interface or interface group switching,
indicating the current working interface address list corresponding to the forwarding rule before smart switching,
indicating the current working interface address list corresponding to the forwarding rule after the smart switching,
indicating a time interval between a time of the occurrence of the smart switching and a time of a last modification of the current working interface address list,
indicating reasons of the occurrence of the smart switching.

Preferably, the abstraction layer forwarding module further comprises:
a response unit, configured to: when receiving a forwarding rule newly-adding request message sent by the upper layer entity, send a forwarding rule newly-adding acknowledge message to the upper layer entity, wherein the forwarding rule newly-adding acknowledge message carries the current interface address list; or,
when receiving a forwarding rule obtaining request message sent by the upper layer entity, send a forwarding rule obtaining response message to the upper layer entity, wherein the forwarding rule obtaining response message carries the current interface address list; or,
when receiving a forwarding rule modifying request message sent by the upper layer entity, send a forwarding rule modifying acknowledge message to the upper layer entity, wherein the forwarding rule modifying acknowledgment message carries the current interface address list.

The embodiments of the present invention provide an interface switching method and device, and an abstraction layer above a plurality of MAC layers of the multi-media home network device selects or switches an interface or interface group used for transmitting data based on a forwarding rule matching the data. Specifically, the abstraction layer monitors the link quality parameter of each interface contained in the interface address list of the forwarding rule, and selects or switches the interface or interface group used for transmitting the data according to the link quality parameter of each interface, data information and device information, to achieve the mechanism in which the abstraction layer of the multi-media home network device intelligently selects or switches the interface for transmitting data based on information such as the link quality, and to solve the problem of affecting the data transmission efficiency due to the undue interface selection.

### Brief Description of the Drawings

FIG. 1 is a schematic diagram of a multi-media hierarchical structure of a home network;
FIG. 2 is a schematic diagram of the structure of an interface switching device provided in the first embodiment of the present invention;
FIG. 3 is a schematic diagram of the structure of an abstraction layer forwarding module 201 in FIG. 2;
FIG. 4 is a schematic diagram of the structure of an adaptive QoS processing unit 2012 in FIG. 3;
FIG. 5 is a schematic diagram of the parameter structure of a current working interface address list provided in the second embodiment of the present invention;
FIG. 6 is a schematic diagram of the adaptive QoS processing module reporting theory in accordance with the second embodiment of the present invention;
FIG. 7 is a flow chart of an interface switching method provided in the second embodiment of the present invention.

### Preferred Embodiments of the Invention

The link quality of an interface dynamically changes in actual data transmission. If the interface used becomes an interface with relatively poor link quality, or, in comprehensive consideration of the change of link quality, data parameter and device parameter and other information, the interface used is no longer suitable for transmission of the corresponding data, it will affect the data transmission efficiency and the overall performance of network transmission.

To solve the abovementioned problem, the embodiments of the present invention provide an interface switching method and device. The parameter, current working interface address list, is added in the forwarding rule. The abstraction layer forwarding module monitors the link quality of each interface or interface group contained in the interface address list of the forwarding rule, and selects or switches the most suitable interface or interface group for data transmission based on the link quality parameter, the data parameter and the device parameter, and if what is selected is an interface group, it is needed to consider distributing traffic from a plurality of interfaces contained in the interface group.

Meanwhile, the interface address list parameter configured by the upper layer entity remains unchanged, to prevent trouble when the user views the forwarding rule; if it is needed to switch to a new interface or interface group, the abstraction layer forwarding module notifies the upper layer entity of an interface smart switching event, and the upper entity may store the event in a local database or report the event to a management platform through a network management program.

Hereinafter, in conjunction with the accompanying drawings, the embodiments of the present invention will be described in detail. It should be noted that, in the case of no conflict, embodiments and features in the embodiments of the present application may be arbitrarily combined with each other.

First, in conjunction with the accompanying drawings, the first embodiment of the present invention will be described.

The embodiment of the present invention provides an interface switching device, with a structure as shown in FIG. 2, comprising:
an abstraction layer forwarding module 201, used to select or switch an interface or interface group used for transmitting data based on a forwarding rule matching the data.

Preferably, the forwarding rule comprises a current interface address list, the current interface address list indicates the interface or interface group used for transmitting the data selected by the abstraction layer.

Preferably, the forwarding rule corresponds to an interface address list, and the structure of the abstraction layer forwarding module 201 is shown in FIG. 3, comprising:
a selection unit 2011, used to, in the interface address list after an upper layer entity newly-adds or modifies the forwarding rule, select a most suitable interface or interface group from the interface address list.

Preferably, the selection unit 2011 is specifically used to select the most suitable interface or interface group according to any one or more of the following parameters of the interface address list:
a link quality parameter of the interface, a data information parameter of the data, a device information parameter of a multi-media home network device and a customized assessment parameter.

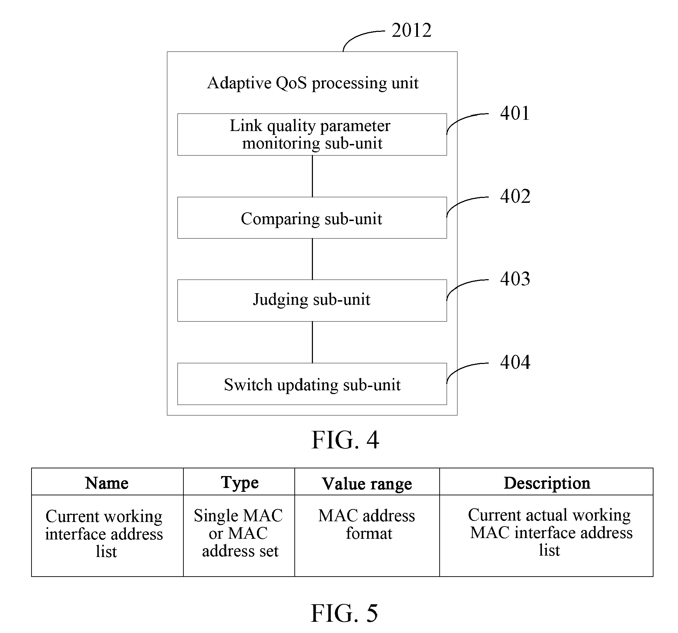

Preferably, the abstraction layer forwarding module 201 further comprises an adaptive Quality of Service (QoS) processing unit 2012, and the structure of the adaptive QoS processing unit 2012 is shown in FIG. 4, comprising:
a link quality parameter monitoring sub-unit 401, used to monitor in the abstraction layer the link quality parameter of each interface contained in the interface address list of the forwarding rule;
a comparing sub-unit 402, used to compare the link quality parameter of each interface with the link quality parameter of the current working interface address list of the forwarding rule;
a judging sub-unit 403, used to, based on a comparison result and any one or all of the following parameters, judge whether it is needed to switch the interface or interface group used for transmitting the data:
   the data information parameter of the data, the device information parameter of the multi-media home network device and the customized assessment parameter;
   a switch updating sub-unit 404, used to, when judging that it is needed to switch to a new interface or interface group, update the current interface address list of the forwarding rule as the new interface or interface group.

Preferably, the abstraction layer forwarding module 201 further comprises:
a first reporting unit 2013, used to take the interface or interface group used for transmitting the data selected by the selection unit 2011 as an interface or interface group smart switching event, and notify to the upper layer entity.

Preferably, the abstraction layer forwarding module 201 further comprises:
a second reporting unit 2014, used to take the interface or interface group used for transmitting the data switched by the switch updating sub-unit as an interface or interface group smart switching event, and notify to the upper layer entity.

Preferably, the second reporting unit 2014 is specifically used to, after the switch updating sub-unit 404 updates the current interface address list of the forwarding rule as the new interface or interface group, send a current working interface address modifying notification message and report the interface or interface group smart switching event to the upper layer entity, wherein the current working interface address modifying notification message carries any or all of the following information:
indicating a serial number of a forwarding rule corresponding to occurrence of interface or interface group switching,
indicating the current working interface address list corresponding to the forwarding rule before smart switching,
indicating the current working interface address list corresponding to the forwarding rule after the smart switching,
indicating a time interval between a time of the occurrence of the smart switching and a time of the last modification of the current working interface address list,
indicating reasons of the occurrence of the smart switching.

Preferably, the abstraction layer forwarding module 201 further comprises:
a response unit 2015, used to, when receiving a forwarding rule newly-adding request message sent by the upper layer entity, send a forwarding rule newly-adding acknowledge message to the upper layer entity, wherein the forwarding rule newly-adding acknowledge message carries the current interface address list; or,
when receiving a forwarding rule obtaining request message sent by the upper layer entity, send a forwarding rule obtaining response message to the upper layer entity, wherein the forwarding rule obtaining response message carries the current interface address list; or,
when receiving a forwarding rule modifying request message sent by the upper layer entity, send a forwarding rule modifying acknowledge message to the upper layer entity, wherein the forwarding rule modifying acknowledge message carries the current interface address list.

Hereinafter, in conjunction with the accompanying drawings, the second embodiment of the present invention will be described.

The embodiment of the present invention provides an interface switching method, combined with the interface switching device shown in FIG. 2 to 4. The abstraction layer above a plurality of MAC layers of the multi-media home network device selects or switches an interface or interface group used for transmitting data based on a forwarding rule matching the data, and the forwarding rule corresponds to an interface address list, indicating a plurality of optional interfaces for data transmission. Specifically, an abstraction layer forwarding module is added in the abstraction layer and a current working interface address list parameter (as shown in FIG. 5) is added in the forwarding rule, and in the interface address list parameter after the upper layer entity newly-adds or modifies the forwarding rule, the selection unit selects the most suitable interface or interface group in these interfaces groups based on the link quality parameter of the interface, the data information parameter of the data, and the device information parameter of the multi-media home network device and the customized assessment parameter contained in the interface address list, and writes the corresponding MAC address list into the current working interface address list parameter of the forwarding rule, and the first reporting unit takes the selected most suitable interface or interface group (i.e., the written current working address list parameter) used for transmitting the data as an interface or interface group smart switching event, and notifies to the upper layer entity.

In the following data forwarding process, the adaptive QoS processing unit periodically monitors the link quality parameter of each interface contained in the interface address list of the forwarding rule, compares the link quality parameter of each interface with the link quality parameter of the current working interface address list of the forwarding rule, and judges whether it is needed to switch to a new interface/interface group based on the comparison result, the data information parameter of the data, the device information parameter of the multi-media home network device and the customized assessment parameter, and if it is judged that it needs switching, notifies the switch updating sub-unit to modify the current working interface address list parameter as a new interface/interface group address.

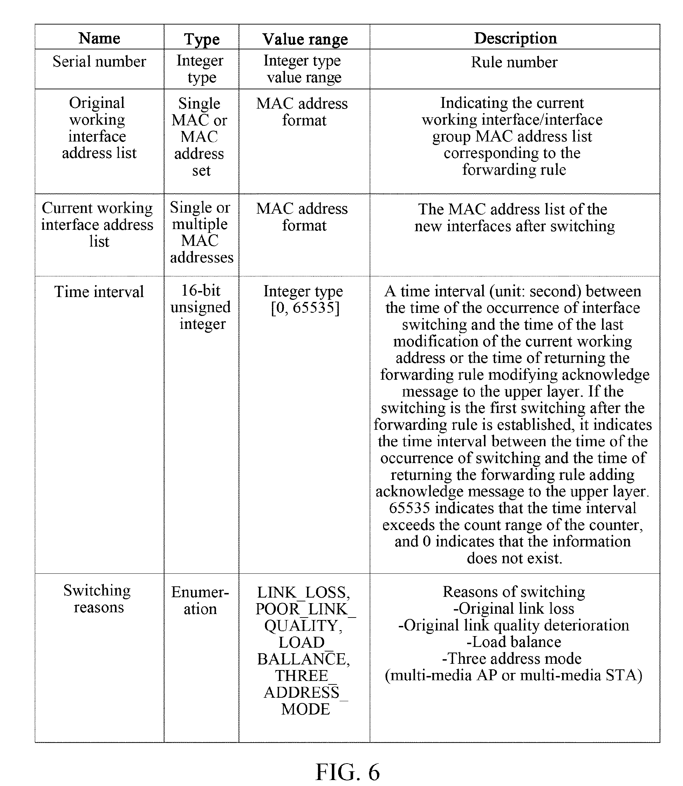

If it is needed to switch to a new interface or interface group, the second reporting sub-unit takes the switched interface or interface group used for transmitting the data as an interface or interface group smart switching event and notifies to the upper layer entity, specifically, it can be reported by the current working interface address modifying notification message. The upper layer entity can store the interface or interface group smart switching event in the local database or report the interface or interface group smart switching event to the management platform through the network management program. Wherein the current working interface address modifying notification message carries any or all of the following information, as shown in FIG. 6:
1) indicating a serial number of a forwarding rule corresponding to occurrence of interface or interface group switching,
2) indicating the current working interface address list corresponding to the forwarding rule before smart switching,
3) indicating the current working interface address list corresponding to the forwarding rule after the smart switching,
4) indicating a time interval between the time of the occurrence of the smart switching and the time of the last modification of the current working interface address list,
5) indicating reasons of the occurrence of the smart switching, including original link loss, original link quality deterioration, load balancing, and three-address mode.

A current working interface address list parameter needs to be added in the parameters returned by the upper layer entity when obtaining the forwarding rule.

When going through the abstraction layer, the data stream should be forwarded through the MAC address interface/interface group specified by the corresponding current working interface address list parameter in the forwarding rule.

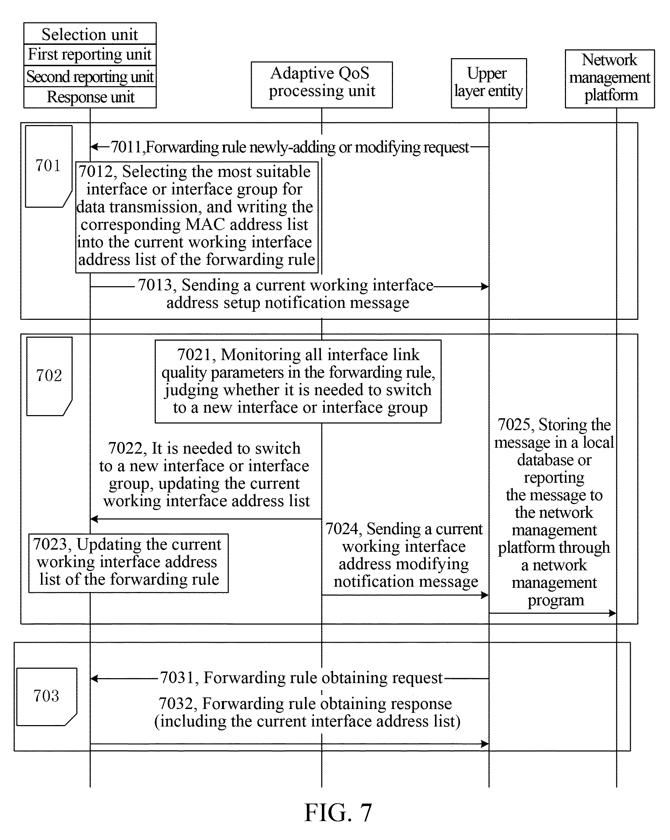

The specific embodiment is as shown in FIG. 7, comprising:
in step 701, the upper layer entity newly-adds or modifies the forwarding rule This step specifically comprises:
   in step 7011, the upper layer entity sends a forwarding rule newly-adding or modifying request message to a receiving unit of the abstraction layer forwarding module of the abstraction layer;
   the initial forwarding rule is contained in the forwarding rule newly-adding request sent by the upper layer to the abstraction layer, specifying that data in line with restrictions of the forwarding rule (called data category parameter, for example, the forwarding rule is applicable to a device sending from address A to address B) can be transmitted through the interface or interface group in the interface address list. The upper layer entity notifies the upper layer entity of the configured data category parameter and interface address list parameter in the forwarding rule newly-adding and modifying request messages.

When the abstraction layer forwarding module receives the forwarding rule newly-adding request message sent by the upper layer entity, the response unit of the abstraction layer forwarding module sends a forwarding rule newly-adding acknowledge message to the upper layer entity, and the forwarding rule newly-adding acknowledge message carries the current interface address list.

When the abstraction layer forwarding module receives the forwarding rule modifying request message sent by the upper layer entity, the response unit of the abstraction layer forwarding module sends a forwarding rule modifying acknowledge message to the upper layer entity, and the forwarding rule modifying acknowledge message carries the current interface address list.

In step 7012, according to the link quality parameter of each interface, the data parameter, the device parameter, and the vendor-defined assessment method included in an interface parameter table configured by the upper layer entity and received by the receiving unit, the selection unit of the abstraction layer selects the most suitable interface or interface group for data transmission and notifies the switch updating subunit to write the corresponding MAC address list into the current working interface address list parameter newly-added in the forwarding rule. The data category parameter and the interface address list parameter configured by the upper layer are stored in the forwarding rule.

In step 7013, the abstraction layer forwarding module sends a notification message of the interface or interface group used for transmitting the data selected by the selection unit to the upper layer entity. Specifically, this message may be a newly-added current working interface address list setup notification message sent by the notification unit, or may be that the response unit carries the written current working interface address list in a forwarding rule newly-adding acknowledge message or a forwarding rule modifying acknowledge message which is sent to the upper layer.

In step 702, the adaptive QoS processing unit performs a smart switching process on the interface or interface group.

The adaptive QoS processing unit: this unit is one of the units newly-added in the abstraction layer forwarding module of the abstraction layer, and its main function is being capable of intelligently judging whether it is needed to switch to a new interface or interface group, thus ensuring that the data stream is distributed to the optimal interface/interface group for sending, which can effectively enhance the user experience QoE. Meanwhile, the smart switching event is notified to the upper layer entity for processing.

The smart switching process of the interface or interface group in the abstraction layer is as follows:
In step 7021, the link quality parameter monitoring sub-unit of the adaptive QoS processing unit monitors the link quality parameters of all the interfaces (the link quality parameters comprise a sending end link quality parameter and a receiving end link quality parameter, specifically including a link occupation ratio, link remaining bandwidth, packet loss rate, SNR and other parameters) contained in the interface address list of the forwarding rule; the comparing sub-unit compares the link quality parameters of all the above interfaces with the link quality parameter of the current working interface address list; the judging sub-unit judges whether it is needed to switch to a new interface or interface group based on the comparison result, the data parameter, the device parameter and the vendor-defined assessment method (e.g., the link quality parameters of other interfaces are a predetermined threshold value higher than the link quality of the current working interface address list).

In step 7022, if judging that it is needed to switch to a new interface or interface group, the judging sub-unit notifies the switch updating sub-unit to update the current working interface address list parameter.

In step 7023, the switch updating sub-unit updates the current working interface address list parameter.

In step 7024, in order to remain the forwarding rule configured by the upper layer entity unchanged and meanwhile the users are not interrupted, the adaptive QoS processing unit may report a interface or interface group smart switching event to the upper layer entity through the second reporting unit. The reported content may comprise:
1) indicating a serial number of a forwarding rule corresponding to occurrence of interface or interface group switching,
2) indicating the current working interface address list corresponding to the forwarding rule before smart switching,
3) indicating the current working interface address list corresponding to the forwarding rule after the smart switching,
4) indicating a time interval between the time of the occurrence of the smart switching and the time of the last modification of the current working interface address list,
5) indicating reasons of the occurrence of the smart switching, including original link loss, original link quality deterioration, load balance, and three-address mode.

In step 7025, after receiving a smart switching event reporting message, the upper layer entity stores the reported content in a local log database or notifies the reported content to the network management platform through a network management protocol such as TR069.

In step 703, the upper layer entity obtains the forwarding rules.

This step specifically comprises:
in step 7031, the abstraction layer forwarding module receives the forwarding rule obtaining request message sent by the upper layer entity;
in step 7032, the response unit of the abstraction layer forwarding module carries the current working interface address list in the forwarding rule obtaining request response message returned by the upper layer entity.

When the abstraction layer receives the forwarding rule obtaining request message sent by the upper layer entity, the abstraction layer sends a forwarding rule obtaining response message to the upper layer entity, and the forwarding rule obtaining response message carries the current interface address list;
when the abstraction layer receives the forwarding rule modifying request message sent by the upper layer entity, the abstraction layer sends a forwarding rule modifying acknowledge message to the upper layer entity, and the forwarding rule modifying acknowledge message carries the current interface address list.

For the setting of the forwarding rule in the abstraction layer forwarding module in the abstraction layer, wherein the forwarding interface address list parameter can be set as a list of multiple MAC addresses or a single MAC address. When two devices can communicate via different transmission interfaces, the upper layer entity, when configuring the forwarding rule, can set the forwarding interface address list parameter as a set comprising these multiple transmission interfaces or one of these multiple transmission interfaces, and the link quality of these interfaces dynamically changes in real data transmission, and in the technical scheme of the embodiments of the present invention, the parameter, current working interface address list, is added to characterize the dynamic change in the link quality.

Those ordinarily skilled in the art can understand that all or some of the steps of the abovementioned embodiments may be implemented using a computer program process, and the computer program may be stored in a computer-readable storage medium and executed on a corresponding hardware platform (such as a system, equipment, apparatus and device), and during execution, one or a combination of the steps of the method embodiment is included.

Alternatively, all or some of the steps of the abovementioned embodiments can also be implemented with integrated circuits, and these steps may be made into individual integrated circuit modules, respectively, or some modules or steps can be made into a single integrated circuit module to implement. Therefore, the present invention is not limited to any specific hardware and software combinations.

Each device/functional module/functional unit in the abovementioned embodiments may be implemented with universal computing devices; they can be concentrated on a single computing device or distributed on a network composed of a plurality of computing devices.

When each device/functional module/functional unit in the abovementioned embodiments are implemented in the form of software functional module and sold or used as an individual product, they may be stored in a computer readable storage medium. The abovementioned computer-readable storage medium may be a read-only memory, magnetic or optical disk, and the like.

Any person skilled in the art can easily think of changes or replacements within the technical scope disclosed in the present invention, and these changes and replacements should be included in the protection scope of the present invention. Accordingly, the protection scope of the present invention should be subject to the protection scope of the claims.

### Industrial Applicability

The embodiments of the present invention provide an interface switching method and device, and an abstraction layer above a plurality of MAC layers of a multi-media home network device selects or switches an interface or interface group used for transmitting data based on a forwarding rule matching the data, the forwarding rule corresponds to an interface address list, and the interface address list comprises two or more interfaces. Specifically, the abstraction layer monitors the link quality parameter of each interface and/or interface group contained in the interface address list of the forwarding rule, and selects the interface or interface group used for transmitting the data for the forwarding rule according to the link quality parameter of each interface and/or interface group, to achieve the mechanism of selecting an interface based on the link quality and to solve the problem of affecting the data transmission efficiency due to the undue interface selection.

## Claims

1. An interface switching method, comprising:
an abstraction layer selecting or switching an interface or interface group used for transmitting data according to a forwarding rule matching the data.

2. The interface switching method of claim 1, wherein, the forwarding rule comprises a current interface address list, and the current interface address list indicates the interface or interface group.

3. The interface switching method of claim 1, wherein, the forwarding rule corresponds to an interface address list, and the abstraction layer selecting the interface or interface group used for transmitting the data is:
in the interface address list after an upper layer entity newly adds or modifies the forwarding rule, the abstraction layer selecting a most suitable interface or interface group from the interface address list.

4. The interface switching method of claim 3, wherein, selecting a most suitable interface or interface group from the interface addresses list is:
selecting a most suitable interface or interface group according to any one or more of the following parameters of the interface address list:
a link quality parameter of the interface, a data information parameter of the data, a device information parameter of a multi-media home network device and a customized assessment parameter.

5. The interface switching method of claim 1, wherein, the abstraction layer switching the interface or interface group used for transmitting the data is:
monitoring in the abstraction layer a link quality parameter of each interface contained in the interface address list of the forwarding rule;
comparing the link quality parameter of each interface with the link quality parameter of the current working interface address list of the forwarding rule;
according to a comparison result and any one or all of the following parameters, judging whether it is needed to switch the interface or interface group used for transmitting the data:
the data information parameter of the data, the device information parameter of the multi-media home network device and the customized assessment parameter;
when judging that it is needed to switch to a new interface or interface group, updating the current interface address list of the forwarding rule to the new interface or interface group.

6. The interface switching method of claim 1, wherein, the method further comprises:
the abstraction layer taking the selected interface or interface group used for transmitting the data as an interface or interface group smart switching event, and notifying to the upper layer entity.

7. The interface switching method of claim 1, wherein, the method further comprises:
the abstraction layer taking the switched interface or interface group used for transmitting the data as an interface or interface group smart switching event, and notifying to the upper layer entity.

8. The interface switching method of claim 7, wherein, the abstraction layer taking the switched interface or interface group used for transmitting the data as the interface or interface group smart switching event, and notifying to the upper layer entity is:
the abstraction layer sending a current working interface address modifying notification message and reporting the interface or interface group smart switching event to the upper layer entity, wherein the current working interface address modifying notification message carries any or all of the following information:
indicating a serial number of a forwarding rule corresponding to occurrence of interface or interface group switching,
indicating the current working interface address list corresponding to the forwarding rule before smart switching,
indicating the current working interface address list corresponding to the forwarding rule after the smart switching,
indicating a time interval between a time of the occurrence of the smart switching and a time of a last modification of the current working interface address list,
indicating reasons of the occurrence of the smart switching.

9. The interface switching method of claim 6 or 7, wherein, the method further comprises:
the upper layer entity storing the interface or interface group smart switching event.

10. The interface switching method of claim 2, wherein, the method further comprises:
when the abstraction layer receives a forwarding rule newly-adding request message sent by the upper layer entity, the abstraction layer sending a forwarding rule newly-adding acknowledge message to the upper layer entity, wherein the forwarding rule newly-adding acknowledge message carries the current interface address list;
when the abstraction layer receives a forwarding rule obtaining request message sent by the upper layer entity, the abstraction layer sending a forwarding rule obtaining response message to the upper layer entity, wherein the forwarding rule obtaining response message carries the current interface address list;
when the abstraction layer receives a forwarding rule modifying request message sent by the upper layer entity, the abstraction layer sending a forwarding rule modifying acknowledge message to the upper layer entity, wherein the forwarding rule modifying acknowledge message carries the current interface address list.

11. An interface switching device, comprising:
an abstraction layer forwarding module, configured to: select or switch an interface or interface group used for transmitting data based on a forwarding rule matching the data.

12. The interface switching device of claim 11, wherein, the forwarding rule comprises a current interface address list, the current interface address list indicates the interface or interface group used for transmitting the data selected by the abstraction layer.

13. The interface switching device of claim 11, wherein, the forwarding rule corresponds to an interface address list, the abstraction layer forwarding module comprises:
a selection unit, configured to: in the interface address list after an upper layer entity newly-adds or modifies the forwarding rule, select a most suitable interface or interface group from the interface address list.

14. The interface switching device of claim 13, wherein,
the selection unit is configured to: select the most suitable interface or interface group according to any one or more of the following parameters of the interface address list:
a link quality parameter of the interface, a data information parameter of the data, a device information parameter of a multi-media home network device and a customized assessment parameter.

15. The interface switching device of claim 11, wherein, the abstraction layer forwarding module further comprises an adaptive Quality of Service (QoS) processing unit, and the adaptive QoS processing unit comprises:
a link quality parameter monitoring sub-unit, configured to: monitor in the abstraction layer a link quality parameter of each interface contained in the interface address list of the forwarding rule;
a comparing sub-unit, configured to: compare the link quality parameter of each interface with the link quality parameter of the current working interface address list of the forwarding rule;
a judging sub-unit, configured to: based on a comparison result and any one or all of the following parameters, judge whether it is needed to switch the interface or interface group used for transmitting the data:
the data information parameter of the data, the device information parameter of the multi-media home network device and the customized assessment parameter;
a switch updating sub-unit, configured to: when judging that it is needed to switch to a new interface or interface group, update the current interface address list of the forwarding rule to the new interface or interface group.

16. The interface switching device of claim 13, wherein, the abstraction layer forwarding module further comprises:
a first reporting unit, configured to: take the interface or interface group used for transmitting the data selected by the selection unit as an interface or interface group smart switching event, and notify to the upper layer entity.

17. The interface switching device of claim 15, wherein, the abstraction layer forwarding module further comprises:
a second reporting unit, configured to: take the interface or interface group used for transmitting the data switched by the switch updating sub-unit as an interface or interface group smart switching event, and notify to the upper layer entity.

18. The interface switching device of claim 17, wherein,
the second reporting unit is configured to: after the switch updating sub-unit updates the current interface address list of the forwarding rule to the new interface or interface group, send a current working interface address modifying notification message and report the interface or interface group smart switching event to the upper layer entity, wherein the current working interface address modifying notification message carries any or all of the following information:
indicating a serial number of a forwarding rule corresponding to occurrence of interface or interface group switching,
indicating the current working interface address list corresponding to the forwarding rule before smart switching,
indicating the current working interface address list corresponding to the forwarding rule after the smart switching,
indicating a time interval between a time of the occurrence of the smart switching and a time of a last modification of the current working interface address list,
indicating reasons of the occurrence of the smart switching.

19. The interface switching device of claim 11, wherein, the abstraction layer forwarding module further comprises:
a response unit, configured to: when receiving a forwarding rule newly-adding request message sent by the upper layer entity, send a forwarding rule newly-adding acknowledge message to the upper layer entity, wherein the forwarding rule newly-adding acknowledge message carries the current interface address list; or,
when receiving a forwarding rule obtaining request message sent by the upper layer entity, send a forwarding rule obtaining response message to the upper layer entity, wherein the forwarding rule obtaining response message carries the current interface address list; or,
when receiving a forwarding rule modifying request message sent by the upper layer entity, send a forwarding rule modifying acknowledge message to the upper layer entity, wherein the forwarding rule modifying acknowledgment message carries the current interface address list.
